# FASCICULE DE BREVET EUROPEEN

(11) **EP 2 294 799 B1**
(45) Date de publication et mention de la délivrance du brevet: **27.03.2013**
(21) Numéro de dépôt: 09757432.1
(22) Date de dépôt: 28.05.2009
(51) Int. Cl.: H04L 29/12, H04L 12/12

(54) **PROCEDE ET DISPOSITIF D'ATTRIBUTION D'ADRESSES MAC DANS UN RESEAU DE COMMUNICATION SUR COURANTS PORTEURS**
VERFAHREN UND EINRICHTUNG ZUM VERGEBEN VON MAC-ADRESSEN IN EINEM TRÄGERAKTUELLEN KOMMUNIKATIONSNETZ
METHOD AND DEVICE FOR ALLOCATING MAC ADDRESSES IN A CARRIER-CURRENT COMMUNICATION NETWORK

(30) Priorité: 02.06.2008 FR 0853604
(43) Date de publication de la demande: 16.03.2011
(73) Titulaire: SAGEMCOM ENERGY & TELECOM SAS, 92500 Rueil-Malmaison (FR)
(72) Inventeur: PIGEON, Nicolas, F-76100 Rouen (FR)
(74) Mandataire: Maillet, Alain
(86) Numéro de dépôt international: PCT/EP2009/056501
(87) Numéro de publication internationale: WO 2009/147050

(56) Documents cités:
- EP-A- 1 005 197
- EP-A- 1 233 538

## Description

La présente invention concerne le domaine de l'attribution d'adresses de communication à des dispositifs connectés à un réseau de communication sur courant porteur. Plus particulièrement, il s'agit des réseaux de télé-relevé de compteurs électriques depuis un appareil de concentration de données à travers le réseau électrique.

Il est connu de télé-relever des données sur des compteurs électriques en fonctionnement sur le réseau électrique. Ceci est généralement fait par un équipement effectuant les relevés et constituant une synthèse pour un système d'information, par exemple le système de facturation de l'opérateur de distribution d'énergie électrique. Cet appareil est connu sous le nom de DC (pour *Data Concentrator* en anglais).

Pour pouvoir être télé-relevé, les compteurs sont dotés d'une interface de communication sur le courant porteur. Cette interface possède en mémoire le numéro de série gravé sur l'appareil. Ce numéro constitue une identification unique et pérenne de chaque compteur.

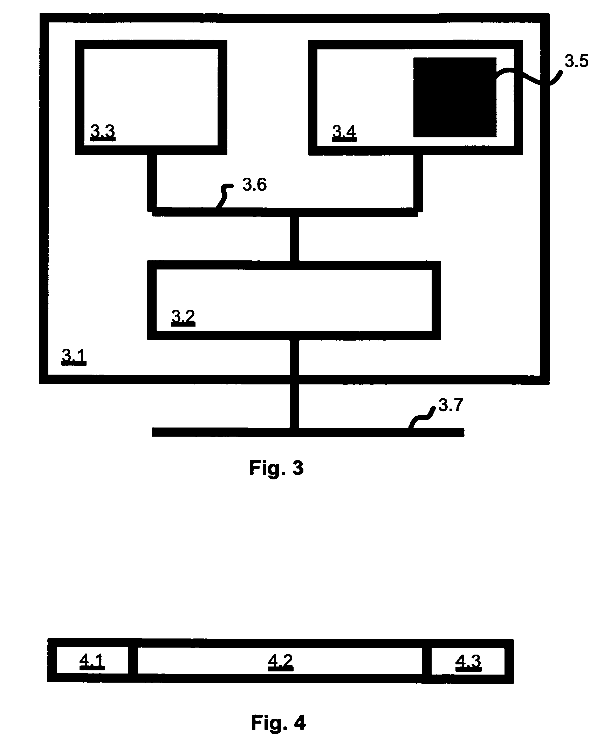

La communication sur le courant porteur est effectuée à l'aide de trames de données modulées sur les câbles du réseau de distribution d'énergie électrique. Ces trames, dont on peut voir un exemple Fig. 4, sont constituées d'un préambule permettant d'identifier la trame 4.1, d'une partie 4.2 constituant à proprement parler le paquet de données transporté et d'une somme de contrôle permettant d'en contrôler l'intégrité 4.3 par exemple à l'aide d'un CRC *(Cyclic Redondancy Code* en anglais). La sélection du destinataire de la trame s'effectue à l'aide d'une adresse, appelée adresse MAC codée sur 12 bits et attribuée à chaque dispositif devant communiquer sur le réseau. Le détail concernant le format de ces trames peut être trouvé dans la norme française NF EN 61334-5-1 ayant pour titre « Automatisation de la distribution à l'aide de systèmes de communication à courants porteurs ; Partie 5-1 : Profils des couches basses - Profil S-FSK (modulation par saut de fréquences étalées)» qui reproduit intégralement la publication CEI 61334-5-1:2001.

Pour pouvoir communiquer, un dispositif connecté au réseau de distribution électrique doit donc se faire attribuer une adresse MAC. L'attribution de ces adresses est décrite dans la norme française NF EN 61334-4-511 ayant pour titre « Automatisation de la distribution à l'aide de systèmes de communication à courants porteurs ; Partie 4-511 : Protocoles de communication de données - Administration de systèmes - Protocole CIASE » qui reproduit intégralement la publication CEI 61334-4-511:2001. Ce protocole permet à un dispositif central du système d'attribuer des adresses MAC à tous les dispositifs connectés au réseau. Le procédé décrit entraîne de nombreuses phases de découvertes qui prennent beaucoup de temps, le débit de connexion étant faible.

L'invention vise à proposer un procédé d'attribution d'adresses MAC amélioré pour ce type de réseau permettant de gagner beaucoup de temps lors de la phase d'attribution des adresses. Ce procédé propose notamment de mémoriser, au niveau du dispositif central d'attribution des adresses, une liste d'association entre les numéros de série des dispositifs et l'adresse MAC attribuée. Il est également proposé d'envoyer une requête de recensement servant à attribuer l'adresse MAC préalable à l'envoi d'une trame de communication.

De cette façon, les phases de découvertes permettant d'attribuer les adresses MAC à des dispositifs sans adresses sont notablement réduites. Le temps où le réseau est dédié à cette découverte s'en trouve réduit augmentant d'autant le temps de communication utile disponible dans le réseau.

L'invention concerne un procédé d'attribution d'adresses dites adresses MAC à des dispositifs connectés à un réseau de distribution d'électricité par un appareil de concentration de données, chaque dispositif étant doté d'un numéro de série distinct et immuable, comportant une étape d'envoi d'une requête de demande de découverte en mode de diffusion générale sur le réseau; une étape de réception d'au moins une notification de découverte en réponse à cette requête en provenance d'un dispositif n'ayant pas d'adresse MAC attribuée, ledit dispositif s'identifiant à l'aide de son numéro de série ; une étape d'attribution d'une adresse MAC disponible au dispositif ayant répondu ; une étape d'envoi d'une requête de recensement au dispositif ayant répondu contenant son numéro de série et l'adresse MAC qui lui a été attribuée et comportant en outre une étape de mémorisation de l'association entre le numéro de série du dispositif et de l'adresse MAC qu'il lui a attribuée.

Selon un mode particulier de réalisation de l'invention, le dispositif étant susceptible de perdre l'adresse MAC qui lui a été attribuée après l'écoulement d'un temps donné sans communication, le procédé comporte en outre une étape d'envoi d'une requête de recensement préalable à l'envoi d'une trame de communication à destination du dispositif.

Selon un mode particulier de réalisation de l'invention, l'étape d'envoi de la trame d'enregistrement préalable à l'envoi d'une trame de communication est effectuée systématiquement pour chaque envoi d'une trame de communication.

Selon un mode particulier de réalisation de l'invention, le moment du dernier envoi d'une trame de communication à un dispositif étant mémorisé, l'étape d'envoi de la requête de recensement préalable à l'envoi d'une trame de communication n'est effectuée que si le temps depuis la dernière trame de communication excède un seuil donné.

Selon un mode particulier de réalisation de l'invention, le procédé comporte en outre une étape d'envoi d'une requête de recensement à tout dispositif dont l'association est mémorisée lors d'une phase de réinitialisation du système.

Selon un mode particulier de réalisation de l'invention, le procédé comporte en outre une étape d'envoi périodique d'une requête de demande de découverte en mode de diffusion générale pour permettre l'attribution d'une adresse MAC à de nouveaux dispositifs apparus sur le réseau.

Selon un mode particulier de réalisation de l'invention, les requêtes de demande de découvertes comportant un premier paramètre définissant un pourcentage de réponse, les dispositifs n'ayant pas d'adresse MAC attribuée prenant une décision de réponse selon un tirage aléatoire avec une probabilité de réponse égale à ce premier paramètre, le premier paramètre est défini avec une probabilité de cent pour cent.

Selon un mode particulier de réalisation de l'invention, les requêtes de demande de découvertes comportant un second paramètre définissant une fenêtre de réponse, les dispositifs répondant à cette requête devant définir aléatoirement un délai de réponse au sein de cette fenêtre de réponse, cette fenêtre est définie inférieure à 30 secondes.

Selon un mode particulier de réalisation de l'invention, les requêtes de demande de découvertes comportant un second paramètre définissant une fenêtre de réponse, les dispositifs répondant à cette requête devant définir aléatoirement un délai de réponse au sein de cette fenêtre de réponse, ce second paramètre est calculé en fonction du nombre de dispositifs ayant répondu et du nombre de collisions détectées lors d'une précédente étape de découverte.

L'invention concerne également un dispositif d'attribution d'adresses dites adresses MAC à des dispositifs connectés à un réseau de distribution d'électricité, chaque dispositif connecté étant doté d'un numéro de série distinct et immuable, comportant des moyens d'envoi d'une requête de demande de découverte en mode de diffusion générale sur le réseau ; des moyens de réception d'au moins une notification de découverte en réponse à cette requête en provenance d'un dispositif n'ayant pas d'adresse MAC attribuée, ledit dispositif s'identifiant à l'aide de son numéro de série ; des moyens d'attribution d'une adresse MAC disponible au dispositif ayant répondu ; des moyens d'envoi d'une requête de recensement au dispositif ayant répondu contenant son numéro de série et l'adresse MAC qui lui a été attribuée ; le dispositif comportant en outre des moyens de mémorisation de l'association entre le numéro de série du dispositif et de l'adresse MAC qu'il lui a attribuée.

Selon un mode particulier de réalisation de l'invention, le dispositif étant susceptible de perdre l'adresse MAC qui lui a été attribuée après l'écoulement d'un temps donné sans communication, le dispositif comporte en outre des moyens d'envoi d'une trame d'enregistrement préalable à l'envoi d'une trame de communication à destination du dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 illustre l'architecture d'un exemple de réseau de distribution électrique ;
La Fig. 2 illustre le séquencement d'échange de requêtes lors d'une phase de découverte et de communication selon un exemple de réalisation de l'invention ;
La Fig. 3 illustre l'architecture du dispositif d'attribution d'adresses MAC selon un exemple de réalisation de l'invention ;
La Fig. 4 illustre le format de trame utilisé dans le système.

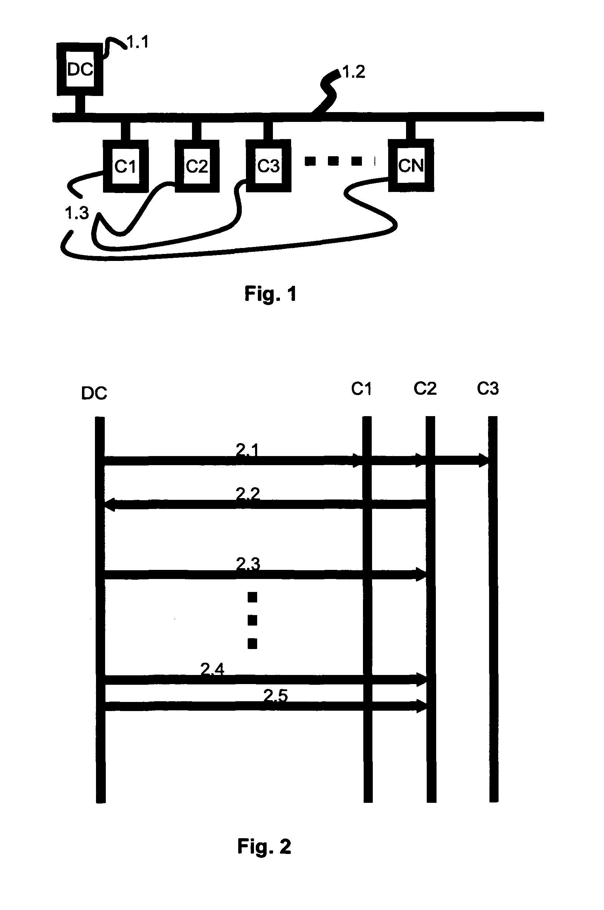

La Fig. 1 décrit un exemple de réseau de distribution d'énergie électrique 1.2. Sur ce réseau est connecté un premier dispositif 1.1 servant de concentrateur de données. Dans l'exemple de réalisation de l'invention, ce dispositif 1.1 a aussi la fonction de client CIASE au sens de la norme NF EN 61334-4-511, c'est-à-dire que ce dispositif sera également en charge de l'attribution des adresses MAC aux dispositifs connectés au réseau. Un certain nombre de ces dispositifs est illustré sous la référence 1.3. Typiquement, ces dispositifs sont des compteurs, C1 à CN, servant à comptabiliser la quantité d'énergie électrique consommée par chaque abonné. Bien que décrits comme des compteurs électriques, ces dispositifs peuvent être de toute nature dans la mesure où ils sont amenés à communiquer avec le dispositif DC 1.1. Dans le contexte de l'exemple de réalisation, le DC est en charge de collecter les données de consommation des compteurs 1.3 pour alimenter un système d'information de l'opérateur gérant le réseau de distribution d'énergie.

Dans ce système, chaque dispositif est doté d'un numéro de série immuable permettant de le distinguer de manière unique sur le réseau. Ce numéro est appelé *system_title* dans la norme sus-citée. Il contient également un champ d'adresse MAC initialisé à la valeur *NEW* lors de l'initialisation du système. Cette valeur indique que le dispositif est nouveau sur le réseau et qu'il ne dispose pas d'une adresse MAC attribuée, on dira que ce dispositif est dans l'état non attribué.

Pour pouvoir communiquer sur le réseau, tout dispositif doit se voir attribuer une adresse MAC. En effet, l'adressage du destinataire d'une trame de communication se fait grâce à cette adresse. Une procédure de découverte des dispositifs connectés est nécessaire pour leur attribuer cette adresse. Cette procédure est décrite dans la norme CIASE déjà citée. Elle consiste pour le dispositif en charge de l'attribution des adresses à envoyer une requête dite demande de recherche. Il est à noter ici que la phase de découverte est initiée par le DC comme toute communication dans le réseau. Dans ce type de réseau, les communications ne sont jamais à l'initiative d'un dispositif connecté, mais toujours à celle du serveur central. Cette requête est envoyée en mode de diffusion général (*broadcast* en anglais), c'est-à-dire qu'elle est destinée à tous les dispositifs connectés au réseau. Seuls les dispositifs dans l'état non attribué, donc ayant un champ adresse MAC à *NEW,* vont répondre à cette requête par une notification de recherche indiquant leur numéro de série. Le dispositif d'attribution d'adresses MAC, ici le DC, leur attribue une adresse et répond par une requête de recensement contenant le numéro de série du dispositif ayant répondu et l'adresse MAC qui lui est attribuée. Le dispositif recevant cette requête et reconnaissant son numéro de série dans la requête renseigne alors son champ adresse MAC avec l'adresse MAC associée. Il se retrouve alors dans l'état attribué et peut dès lors communiquer sur le réseau. Dans ce document on appelle phase de découverte, l'opération consistant pour le dispositif d'attribution à émettre une requête en demande de découverte, à recevoir l'ensemble des réponses à cette requête, à attribuer des adresses MAC aux dispositifs ayant répondu et à envoyer les messages de recensement correspondants aux dispositifs pour leur attribuer leurs adresses MAC.

Il est à noter que ces communications se font à 1200 bauds et prennent donc beaucoup de temps. D'autre part, dès que le nombre de dispositifs devant être attribués augmente, le risque de collision entre les différentes notifications de recherche envoyées par tous ces dispositifs augmente de manière conséquente. On est alors obligé de réitérer ces phases de découverte jusqu'à ce que tous les dispositifs aient pu être attribués. La norme prévoit deux mécanismes permettant d'aider à la gestion de phases de découvertes dans des réseaux contenant un nombre important de dispositifs à découvrir. Ces mécanismes sont basés sur deux paramètres pouvant être utilisés dans la requête en demande de découverte. Le premier paramètre est un pourcentage de réponse représenté par un entier compris entre 1 et 100. Lors de la réception de la demande de découverte, un dispositif non attribué va tirer au hasard un nombre entier entre 1 et 100, si ce nombre est inférieur ou égal au paramètre de probabilité de réponse il prend la décision de répondre. On voit que par ce mécanisme on peut définir le pourcentage de dispositifs devant être attribués et qui va répondre à une requête en demande de découverte donnée. On peut ainsi limiter le nombre de dispositifs qui va tenter de répondre et donc les collisions entre ces réponses. On comprend que, plus on limite ce pourcentage de réponse, plus il faut multiplier les phases de découverte pour que tous les dispositifs se retrouvent attribués.

Le second mécanisme est basé sur un second paramètre dans la requête en demande de découverte qui définit un créneau temporel pour la réponse. Le temps est comptabilisé en périodes (*slot* en anglais), ces périodes durant typiquement 300 millisecondes. Le paramètre de créneau temporel définit un nombre de périodes sur 15 bits alloués aux réponses des dispositifs. On voit que le créneau temporel peut être défini jusqu'à une durée d'environ 3 heures. Lorsqu'un dispositif doit être alloué, il tire un nombre aléatoire qui lui permet de positionner temporellement sa réponse au sein du créneau temporel ainsi défini. Ce mécanisme permet d'étaler temporellement les réponses des dispositifs devant être attribués au sein de ce créneau temporel. Ces deux mécanismes permettent donc d'une part de réduire le nombre de dispositifs devant répondre et d'autre part de répartir dans le temps ces réponses pour limiter les collisions.

Malgré l'utilisation de ces mécanismes, dès que le nombre de dispositifs devant être attribués est de l'ordre du millier, la découverte implique de nombreuses phases de découvertes utilisant une faible probabilité de réponse et un créneau temporel long, ce qui peut durer plusieurs heures, voire dépasser un jour de découverte. Pendant ce temps, le réseau ne peut pas être utilisé de manière utile pour des opérations de télé-relevage des compteurs.

Il est à noter qu'à chaque réinitialisation du système, l'intégralité des dispositifs se retrouve dans un état non attribué. La réinitialisation nécessite alors une découverte complète du réseau. D'autre part, des procédures de découverte doivent être menées très régulièrement pour permettre d'une part d'attribuer une adresse aux nouveaux dispositifs ayant pu être connectés au réseau et d'autre part de ré-attribuer une adresse aux dispositifs qui auront perdu leur adresse du fait du mécanisme entraînant la perte de l'adresse MAC après un temps donné sans communication.

D'autre part, passé un certain délai sans communication, les dispositifs perdent leur adresse MAC. Ce délai est typiquement de 12 heures. Quand la découverte dure plus de 12 heures, les premiers dispositifs attribués perdent leur adresse et se retrouvent non attribués avant la fin de la découverte. Cette procédure ne se termine alors jamais.

Pour pallier ces problèmes, l'invention propose de mémoriser au niveau du dispositif d'attribution des adresses MAC, les adresses attribuées aux dispositifs. Cette mémorisation se fait, par exemple, sous la forme d'une liste d'associations entre les numéros de série des dispositifs et l'adresse MAC attribuée. De cette façon, la procédure de découverte est initialisée par un envoi de requêtes de recensement à tous les dispositifs mémorisés. Une fois cet envoi fait, on peut effectuer une procédure de découverte classique. On est ainsi assuré qu'un nombre restreint de dispositifs devra être attribué lors de cette phase de découverte. Plus précisément, seuls les nouveaux dispositifs apparaissant sur le réseau devront être attribués. Ce nombre étant plus restreint en dehors de modifications majeures du réseau, il est alors possible de manière avantageuse de positionner le paramètre de probabilité de réponse à 100 autorisant de ce fait tous les dispositifs non attribués à répondre. Avantageusement également, on utilisera des créneaux temporels de courte durée. Typiquement, un créneau temporel d'une quinzaine de secondes permettant à environ 25 dispositifs de répondre peut être utilisé au lieu des créneaux durant typiquement de nombreuses minutes. En tout état de cause, on pourra utiliser des créneaux temporels inférieurs à 30 secondes.

Avantageusement, le mécanisme de mémorisation permet d'implémenter un mécanisme consistant à envoyer une requête de recensement à un dispositif préalablement à l'envoi d'une trame de communication. De cette façon, on se prémunit contre le fait que le dispositif ait pu perdre son adresse MAC. En effet, le dispositif recevant une requête de recensement va réinitialiser son adresse MAC s'il l'avait perdue. Il est alors en mesure de recevoir la trame de communication. Cette réinitialisation de l'adresse MAC se fait indépendamment du mécanisme de découverte. La périodicité des procédures de découverte peut alors être réduite, car elles ne servent alors qu'à la découverte de nouveaux dispositifs connectés au réseau.

Avantageusement, l'envoi de cette requête de recensement se fait systématiquement préalablement à l'envoi de toutes les trames de communication. On est alors assuré que la trame de communication est destinée à un dispositif attribué.

Alternativement, il est également possible de mémoriser le moment de la dernière communication avec chaque dispositif. On peut alors limiter l'envoi préalable de la requête de recensement aux dispositifs avec lesquels le DC n'a pas communiqué depuis un temps donné, généralement correspondant au délai après lequel le dispositif perd son adresse MAC. On limite ainsi le nombre de requêtes de recensement devant être envoyées.

Avantageusement, on peut chercher à déterminer le nombre de collisions survenant en réponse à l'envoi d'une requête en demande de découverte. Une collision est détectée lorsque le DC reçoit un préambule correct, mais que la somme de contrôle est fausse. On en déduit qu'au moins une autre réponse est venue perturber l'envoi de la première. Si le nombre de collisions est élevé, on peut soit augmenter le créneau temporel de réponse, soit diminuer la probabilité de réponse, soit les deux pour permettre à un plus grand nombre de dispositifs de répondre.

La Fig. 2 illustre les échanges de messages selon l'exemple de réalisation de l'invention. Le DC envoie une requête en demande de découverte 2.1 qui est reçue par les dispositifs C1, C2 et C3. Dans l'exemple dessiné, seul C2 est non attribué et répond par une notification de découverte 2.2 au DC. Celui-ci lui attribue alors une adresse MAC qu'il mémorise et lui envoie une requête de recensement 2.3 contenant son numéro de série et son adresse MAC attribuée. Lors d'une communication, le DC envoie de nouveau une requête de recensement 2.4 préalable à la trame de communication 2.5 pour assurer que le dispositif C2 soit attribué préalablement à la communication et donc en mesure de recevoir la trame de communication.

La Fig. 3 illustre un exemple d'architecture du dispositif d'attribution d'adresses MAC selon l'invention 3.1. Ce dispositif est connecté à un réseau de distribution d'énergie électrique 3.7. Il dispose d'un processeur 3.3 permettant d'implémenter le procédé précédemment décrit. Il dispose également d'une mémoire 3.4 contenant un moyen 3.5 de mémoriser l'association entre les numéros de série et les adresses MAC des dispositifs. Ce moyen est, par exemple, une liste d'associations. Le processeur et la mémoire communiquent par un bus de communication 3.6 qui permet également la communication avec une interface de communication sur courants porteurs 3.2 connectée au réseau 3.7.

## Revendications

1. Procédé d'attribution d'adresses dites adresses MAC à des dispositifs connectés à un réseau de distribution d'électricité par un appareil de concentration de données, chaque dispositif étant doté d'un numéro de série distinct et immuable, comportant les étapes suivantes :
- une étape d'envoi d'une requête de demande de découverte en mode de diffusion générale sur le réseau ;
- une étape de réception d'au moins une notification de découverte en réponse à cette requête en provenance d'un dispositif n'ayant pas d'adresse MAC attribuée, ledit dispositif s'identifiant à l'aide de son numéro de série ;
- une étape d'attribution d'une adresse MAC disponible au dispositif ayant répondu ;
- une étape d'envoi d'une requête de recensement au dispositif ayant répondu contenant son numéro de série et l'adresse MAC qui lui a été attribuée ;
**caractérisé en ce qu'**il comporte en outre :
- une étape de mémorisation de l'association entre le numéro de série du dispositif et de l'adresse MAC qu'il lui a attribuée.

2. Procédé selon la revendication 1, **caractérisé en ce que** le dispositif étant susceptible de perdre l'adresse MAC qui lui a été attribuée après l'écoulement d'un temps donné sans communication, il comporte en outre :
- une étape d'envoi d'une requête de recensement préalable à l'envoi d'une trame de communication à destination du dispositif.

3. Procédé selon la revendication 1 ou 2, **caractérisé en ce que** l'étape d'envoi de la trame d'enregistrement préalable à l'envoi d'une trame de communication est effectuée systématiquement pour chaque envoi d'une trame de communication.

4. Procédé selon la revendication 1 ou 2, **caractérisé en ce que** le moment du dernier envoi d'une trame de communication à un dispositif étant mémorisé, l'étape d'envoi de la requête de recensement préalable à l'envoi d'une trame de communication n'est effectuée que si le temps depuis la dernière trame de communication excède un seuil donné.

5. Procédé selon l'une des revendications 1 à 4, **caractérisé en ce que** le procédé comporte en outre :
- une étape d'envoi d'une requête de recensement à tout dispositif dont l'association est mémorisée lors d'une phase de réinitialisation du système.

6. Procédé selon l'une des revendications 1 à 5, **caractérisé en ce que** le procédé comporte en outre :
- une étape d'envoi périodique d'une requête de demande de découverte en mode de diffusion générale pour permettre l'attribution d'une adresse MAC à de nouveaux dispositifs apparus sur le réseau.

7. Procédé selon la revendication 6, **caractérisé en ce que** les requêtes de demande de découvertes comportant un premier paramètre définissant un pourcentage de réponse, les dispositifs n'ayant pas d'adresse MAC attribuée prenant une décision de réponse selon un tirage aléatoire avec une probabilité de réponse égale à ce premier paramètre, le premier paramètre est défini avec une probabilité de cent pour cent.

8. Procédé selon la revendication 6, **caractérisé en ce que** les requêtes de demande de découvertes comportant un second paramètre définissant une fenêtre de réponse, les dispositifs répondant à cette requête devant définir aléatoirement un délai de réponse au sein de cette fenêtre de réponse, cette fenêtre est définie inférieure à 30 secondes.

9. Procédé selon la revendication 6, **caractérisé en ce que** les requêtes de demande de découvertes comportant un second paramètre définissant une fenêtre de réponse, les dispositifs répondant à cette requête devant définir aléatoirement un délai de réponse au sein de cette fenêtre de réponse, ce second paramètre est calculé en fonction du nombre de dispositifs ayant répondu et du nombre de collisions détectées lors d'une précédente étape de découverte.

10. Dispositif d'attribution d'adresses dites adresses MAC à des dispositifs connectés à un réseau de distribution d'électricité, chaque dispositif connecté étant doté d'un numéro de série distinct et immuable, comportant :
- des moyens d'envoi d'une requête de demande de découverte en mode de diffusion générale sur le réseau ;
- des moyens de réception d'au moins une notification de découverte en réponse à cette requête en provenance d'un dispositif n'ayant pas d'adresse MAC attribuée, ledit dispositif s'identifiant à l'aide de son numéro de série ;
- des moyens d'attribution d'une adresse MAC disponible au dispositif ayant répondu ;
- des moyens d'envoi d'une requête de recensement au dispositif ayant répondu contenant son numéro de série et l'adresse MAC qui lui a été attribuée ;
**caractérisé en ce qu'**il comporte en outre :
- des moyens de mémorisation de l'association entre le numéro de série du dispositif et de l'adresse MAC qu'il lui a attribuée.

11. Dispositif selon la revendication 10, **caractérisé en ce que** le dispositif étant susceptible de perdre l'adresse MAC qui lui a été attribuée après l'écoulement d'un temps donné sans communication, le dispositif comporte en outre :
- des moyens d'envoi d'une trame d'enregistrement préalable à l'envoi d'une trame de communication à destination du dispositif.

## Claims

1. Method of allocating addresses known as MAC addresses to devices connected to an electricity distribution network by a data concentration apparatus, each device being provided with a distinct unchangeable serial number, comprising the following steps:
- a step of sending a discovery demand request in general broadcast mode over the network;
- a step of receiving at least one discovery notification in response to this request coming from a device not having an MAC address allocated, said device identifying itself by means of its serial number;
- a step of allocating an available MAC address to the device having responded;
- a step of sending a cataloguing request to the device having responded containing its serial number and the MAC address allocated to it;
**characterised in that** it further comprises:
- a step of recording the association between the serial number of the device and the MAC address allocated to it.

2. Method according to claim 1, **characterised in that**, the device being liable to lose the MAC address allocated to it after the elapse of a given time without communication, it further comprises:
- a step of sending a cataloguing request prior to the sending of a communication frame toward the device.

3. Method according to claim 1 or 2, **characterised in that** the step of sending the registration frame prior to the sending of a communication frame is performed systematically for each sending of a communication frame.

4. Method according to claim 1 or 2, **characterised in that** the moment of the last sending of a communication frame to a device being recorded, the step of sending the cataloguing request prior to the sending of a communication frame is performed only if the time since the last communication frame exceeds a given threshold.

5. Method according to one of claims 1 to 4, **characterised in that** the method further comprises:
- a step of sending a cataloguing request to any device the association of which is recorded during a phase of re-initialisation of the system.

6. Method according to one of claims 1 to 5, **characterised in that** the method further comprises:
- a step of periodic sending of a discovery demand request in general broadcast mode to enable a MAC address to be allocated to new devices that have appeared on the network.

7. Method according to claim 6, **characterised in that**, the discovery demand requests comprising a first parameter defining a response percentage, the devices not having an allocated MAC address making a response decision in accordance with a random drawing with a probability of response equal to this first parameter, the first parameter is defined with a probability of one hundred percent.

8. Method according to claim 6, **characterised in that**, the discovery demand requests comprising a second parameter defining a response window, the devices responding to this request having to define randomly a response time within this response window, this window is defined as less than 30 seconds.

9. Method according to claim 6, **characterised in that**, the discovery demand request comprises second parameter defining a response window, the devices responding to this request having to define randomly a response time within this response window, this second parameter is calculated according to the number of devices that have responded and the number of collisions detected during a previous discovery step.

10. Device for allocating addresses known as MAC addresses to devices connected to an electricity distribution network, each connected device being provided with a distinct unchangeable serial number, comprising:
- means for sending a discovery demand request in general broadcast mode over the network;
- means for receiving at least one discovery notification in response to this request coming from a device not having an MAC address allocated, said device identifying itself by means of its serial number;
- means for allocating an available MAC address to the device having responded;
- means for sending a cataloguing request to the device having responded containing its serial number and the MAC address allocated to it;
**characterised in that** it further comprises:
- means for recording the association between the serial number of the device and the MAC address allocated to it.

11. Device according to claim 10, **characterised in that**, the device being liable to lose the MAC address allocated to it after the elapse of a given time without communication, the device further comprises:
- means for sending a registration frame prior to the sending of a communication frame to the device.

## Patentansprüche

1. Verfahren zur Zuweisung von Adressen, sogenannten MAC-Adressen, an mit einem Stromverteilungsnetz verbundene Vorrichtungen durch ein Datenkonzentrationsgerät, wobei jede Vorrichtung mit einer eigenen und unveränderlichen Seriennummer ausgestattet ist, das die folgenden Schritte aufweist:
- einen Schritt des Sendens einer Erkennungsanforderungsabfrage in der Betriebsart der allgemeinen Verbreitung im Netz;
- einen Schritt des Empfangs mindestens einer Erkennungsmitteilung als Antwort auf diese Abfrage von einer Vorrichtung, die keine zugewiesene MAC-Adresse hat, wobei die Vorrichtung sich mit Hilfe ihrer Seriennummer identifiziert;
- einen Schritt der Zuweisung einer verfügbaren MAC-Adresse an die Vorrichtung, die geantwortet hat;
- einen Schritt des Sendens einer Erfassungsabfrage an die Vorrichtung, die geantwortet hat, die ihre Seriennummer und die MAC-Adresse enthält, die ihr zugewiesen wurde;
**dadurch gekennzeichnet, dass** es außerdem aufweist:
- einen Schritt der Speicherung der Vereinigung zwischen der Seriennummer der Vorrichtung und der MAC-Adresse, die es ihr zugewiesen hat.

2. Verfahren nach Anspruch 1, **dadurch gekennzeichnet, dass** es, da die Vorrichtung die MAC-Adresse, die ihr zugewiesen wurde, nach Ablauf einer gegebenen Zeit ohne Kommunikation verlieren kann, außerdem aufweist:
- einen Schritt des Sendens einer Erfassungsabfrage vor dem Senden eines Kommunikationsrahmens an die Vorrichtung.

3. Verfahren nach Anspruch 1 oder 2, **dadurch gekennzeichnet, dass** der Schritt des Sendens des Aufzeichnungsrahmens vor dem Senden eines Kommunikationsrahmens systematisch für jedes Senden eines Kommunikationsrahmens durchgeführt wird.

4. Verfahren nach Anspruch 1 oder 2, **dadurch gekennzeichnet, dass**, da der Zeitpunkt der letzten Sendung eines Kommunikationsrahmens an eine Vorrichtung gespeichert ist, der Schritt des Sendens der Erfassungsabfrage vor dem Senden eines Kommunikationsrahmens nur durchgeführt wird, wenn die Zeit seit dem letzten Kommunikationsrahmen eine gegebene Schwelle überschreitet.

5. Verfahren nach einem der Ansprüche 1 bis 4, **dadurch gekennzeichnet, dass** das Verfahren außerdem aufweist:
- einen Schritt des Sendens einer Erfassungsabfrage an jede Vorrichtung, deren Verbindung in einer Phase der Neuinitialisierung des Systems gespeichert wird.

6. Verfahren nach einem der Ansprüche 1 bis 5, **dadurch gekennzeichnet, dass** das Verfahren außerdem aufweist:
- einen Schritt des periodischen Sendens einer Erkennungsanforderungsabfrage in der Betriebsart der allgemeinen Verbreitung, um die Zuweisung einer MAC-Adresse an neue Vorrichtungen zu erlauben, die im Netz aufgetreten sind.

7. Verfahren nach Anspruch 6, **dadurch gekennzeichnet, dass**, da die Erkennungsanforderungsabfragen einen ersten Parameter aufweisen, der einen Antwortprozentsatz definiert, wobei die Vorrichtungen, denen keine MAC-Adresse zugewiesen ist, eine Antwortentscheidung gemäß einer Zufallsziehung mit einer Antwortwahrscheinlichkeit gleich diesem ersten Parameter fällen, der erste Parameter mit einer hundertprozentigen Wahrscheinlichkeit definiert wird.

8. Verfahren nach Anspruch 6, **dadurch gekennzeichnet, dass**, da die Erkennungsanforderungsabfragen einen zweiten Parameter aufweisen, der ein Antwortfenster definiert, wobei die auf diese Abfrage antwortenden Vorrichtungen eine Antwortfrist innerhalb dieses Antwortfensters beliebig definieren müssen, dieses Fenster kleiner als 30 Sekunden definiert ist.

9. Verfahren nach Anspruch 6, **dadurch gekennzeichnet, dass**, da die Erkennungsanforderungsabfragen einen zweiten Parameter aufweisen, der ein Antwortfenster definiert, wobei die auf diese Abfrage antwortenden Vorrichtungen eine Antwortfrist innerhalb dieses Antwortfensters beliebig definieren müssen, dieser zweite Parameter abhängig von der Anzahl von Vorrichtungen, die geantwortet haben, und von der Anzahl von Kollisionen berechnet wird, die während eines vorhergehenden Erkennungsschritts erfasst wurden.

10. Vorrichtung zur Zuweisung von Adressen, sogenannten MAC-Adressen, an mit einem Stromverteilungsnetz verbundene Vorrichtungen, wobei jede verbundene Vorrichtung mit einer eigenen und unveränderlichen Seriennummer ausgestattet ist, enthaltend:
- Einrichtungen zum Senden einer Erkennungsanforderungsabfrage in der Betriebsart der allgemeinen Verbreitung im Netz;
- Einrichtungen zum Empfang mindestens einer Erkennungsmitteilung als Antwort auf diese Abfrage von einer Vorrichtung, die keine zugewiesene MAC-Adresse hat, wobei die Vorrichtung sich mit Hilfe ihrer Seriennummer identifiziert;
- Einrichtungen zur Zuweisung einer verfügbaren MAC-Adresse an die Vorrichtung, die geantwortet hat;
- Einrichtungen zum Senden einer Erfassungsabfrage an die Vorrichtung, die geantwortet hat, die ihre Seriennummer und die ihr zugewiesene MAC-Adresse enthält;
**dadurch gekennzeichnet, dass** sie außerdem aufweist:
- Einrichtungen zum Speichern der Verbindung zwischen der Seriennummer der Vorrichtung und der MAC-Adresse, die sie ihr zugewiesen hat.

11. Vorrichtung nach Anspruch 10, **dadurch gekennzeichnet, dass**, da die Vorrichtung die ihr zugewiesene MAC-Adresse nach Ablauf einer gegebenen Zeit ohne Kommunikation verlieren kann, die Vorrichtung außerdem aufweist:
- Einrichtungen zum Senden eines Aufzeichnungsrahmens vor dem Senden eines Kommunikationsrahmens an die Vorrichtung.
